Europäisches Patentamt

European Patent Office

Office européen des brevets

(11) Publication number: **0 062 991**
**B1**

# (12) EUROPEAN PATENT SPECIFICATION

(45) Date of publication of patent specification: **17.09.86**

(51) Int. Cl.⁴: **B 29 C 67/12**

(21) Application number: **82301601.9**

(22) Date of filing: **26.03.82**

(54) Manufacture of composite material articles.

(30) Priority: **11.04.81 GB 8111451**

(43) Date of publication of application:
**20.10.82 Bulletin 82/42**

(45) Publication of the grant of the patent:
**17.09.86 Bulletin 86/38**

(84) Designated Contracting States:
**AT BE CH DE FR GB IT LI LU NL SE**

(56) References cited:
**DE-A-2 000 782**
**DE-A-2 544 584**
**US-A-3 101 638**
**US-A-3 110 207**
**US-A-3 900 357**
**US-A-4 200 271**

(73) Proprietor: **GKN TECHNOLOGY LIMITED**
**Group Technological Centre Birmingham New Road**
**Wolverhampton West Midlands WV4 6BW (GB)**

(72) Inventor: **Spedding, Colin Edward**
**11 Lonsdown Avenue Codsal**
**Wolverhampton West Midlands WV8 2EN (GB)**

(74) Representative: **Dodd, Graham Marshall et al**
**Guest Keen and Nettlefolds plc Group Patents and Licensing Department P.O. Box 55 Ipsley House Ipsley Church Lane**
**Redditch Worcestershire B98 0TL (GB)**

## Description

This invention relates to apparatus for the manufacture of articles from a composite, fibre-reinforced resin, material. The invention relates particularly, although not exclusively, to the manufacture of core elements for leaf springs of composite material, the finished spring comprising the core element, which is of resin material reinforced with randomly oriented fibres, sandwiched between surface layers of fibres extending longitudinally of the spring and spaced in the direction of bending of the spring.

The core element for such a spring is of tapered form, with a maximum thickness in its central region and minimum thickness at its ends. The maximum thickness may not be exactly at the geometrical centre of the spring longitudinally thereof, but may be offset towards an end thereof. It is convenient that such a core element can be built up from a fibre resin material in sheet or strip form, in which case successive lengths must be superimposed on one another until the desired shape is attained. In general hitherto this has been done manually, which is very time consuming, expensive, and unsuitable for mass production. It is the object of the present invention to improve upon such manual production.

One form of apparatus for automatic stacking of sheets of material (wood veneer) on top of one another is disclosed in DE—A—2000782. The sheets are passed along a conveyor to which they are held by suction, and dropped in a predetermined position onto a stack of sheets to build a stack of a required shape. However, the apparatus is relatively slow in operation and thus not advantageous for mass production of composite articles such as core elements for springs.

A further example of an apparatus for stacking sheets of material is disclosed in US—A—3101638. Metal sheets to form heat exchange fins are cut from punched sheet emerging from a press, and carried by a suction box to a stacker in which the sheets are stacked in alignment with one another. Such individual transfer of sheets is relatively slow in mass production terms, however, and the apparatus does not provide for assembly of the stacked sheets other than in alignment with one another.

The present invention provides apparatus for use in making articles from composite material, comprising means for drawing fibre resin material in sheet form from a supply thereof, means for severing successive lengths of said material, and means for transferring said lengths to a former on which a said article can be assembled from said lengths of material, characterised by at least two transfer tables, each able to be positioned to receive a severed length of said material, and having a perforated surface with which the material can be held in contact by partial exhaustion of the interior of the transfer table, means for positioning a transfer table with said length of material thereon in a desired relationship with said former and for releasing said length to transfer it to said former, while the other of said transfer tables is in a position to receive another length of said material for subsequent transfer to said former.

By the use of two transfer tables operating at the same time alternately to transfer sheets of composite material, apparatus according to the invention enables rapid mass-production of spring elements.

The invention will now be described by way of example with reference to the accompanying drawing, of which:

Figure 1 is a diagram showing an embodiment of the apparatus according to the invention;

Figure 2 shows an article which the apparatus may be used to manufacture.

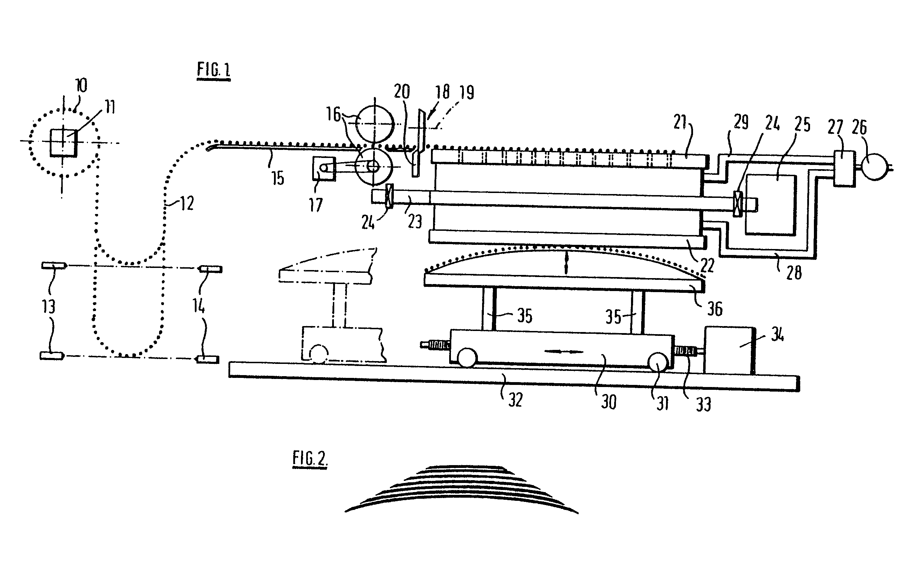

Referring firstly to Figure 1, the apparatus comprises a supply of fibre-resin material in the form of a roll 10 thereof carried on a suitable rotatable support to enable the material to be fed from the roll. A motor 11 is provided for driving the roll to feed material therefrom. The material may comprise randomly oriented fibers such as glass fibres in a synthetic resin such as an epoxy resin which is partially cured so as to be capable of being handled and yet reasonably flexible. The width of the material is that which is required for the manufacture of a single spring, or a plurality of springs side by side with individual springs being cut at a later stage from the assembly resulting from further manufacturing operations.

The apparatus defines a feed path in which the material hangs downwardly in a loop 12. Sensors, e.g. light sources 13 and detectors 14, are provided for detecting acceptable maximum and minimum quantities of material in the loop 12, and controlling the operation of motor 11 to maintain the quantity of material between these limits.

The apparatus defines a feed path for material including a table 15 leading to feed rolls 16 which are urged towards one another with sufficient force to grip the material and are drivable by a motor 17. Immediately after the feed rolls 16, there is a cutter 18 which may be a guillotine or as illustrated may be a wheel rotatable about an axis 19 and capable of being transversed across the material to provide a cutting action with a fixed blade 20.

Immediately following the cutter 18 there is provided a transfer table indicated generally at 21. The transfer table 21 forms part of an assembly which includes a further transfer table 22, the assembly of the two transfer tables being carried for angular movement by a shaft 23 supported in bearings 24. The angular movement is effected by a motor 25. Each transfer table takes the form of a hollow chamber with a perforated surface member, so that when the chamber is partially exhausted the material is held in contact with the surface thereof. Selective exhaustion of the chambers of the transfer tables is effected by a pump 26, valve 27, and flexible pipes 28, 29.

Generally beneath the assembly of transfer tables is disposed a trolley 30 movable on wheels 31 along a track 32. Movement of the trolley to a desired position along the track is effected by a lead screw 33 and a stepping motor 34. The trolley supports, on jacks 35, a former 36, the jacks enabling the former to be raised to contact the lowermost transfer table and lowered to permit the assembly of transfer tables to be moved angularly on its shaft 23.

Figure 2 shows an example of an article which the apparatus may be used to make. This is a core element for a composite leaf spring, of randomly oriented fibres and intended to space surface layers of longitudinally oriented fibres apart from one another in the direction of bending of the leaf spring. The core element is thicker in its centre than at its ends, and is made up of a succession of relatively thin layers of material on top of one another, the individual layers of material being successively shorter.

In use of the apparatus to make such a core element, the first required length of the fibre resin material is drawn from the supply thereof to overlie the transfer table. The length is determined by the time for which the feed rolls 16 of the apparatus are operated. When the correct length of material lies on the transfer table, it is severed by the cutter. The material is then held in contact with the transfer table by partial exhaustion of the interior cavity thereof, and the assembly of the two transfer tables moved angularly through 180 degrees so that the material faces the upper surface of the former 36. The trolley is moved along its track to the appropriate position, and the former raised to contact the sheet of material on the transfer table. By operation of valve 27 to discontinue exhaustion of the transfer table interior, the material can then fall onto the upper surface of the former. During this operation, the next required length of material can be advanced to the other transfer table.

This sequence of operations is repeated until the core element of the spring has been built up from an appropriate number of lengths of the fibre resin material. By provision of an appropriate control system, e.g. utilizing a micro-processor, the operation of the apparatus can be programmed to build up a core element with a required number and disposition of layers of material. Automatic control systems for a selected sequence of operations are well known to those skilled in the art.

For some purposes, the core portion of a composite leaf spring may not be required to be symmetrical, i.e. to have its thickest part exactly at its geometric centre. It is readily possible using the apparatus of the invention to provide for this, merely by selection of the amount by which the trolley is moved along its track between the transferring of successive lengths of material thereto. It is, of course, also possible if desired merely to build up a component of a constant thickness of material, by transferring successive equal lengths of material to the same position on the former carried by the trolley. If a curved element is not required to be built up, a former with a flat top surface would of course be used.

It is also possible to transfer material by means other than the angularly moving transfer table assembly described. For example, a transfer mechanism could be used which picks up successive lengths of material and moves it, e.g. laterally to the former on which the article is to be built.

**Claims**

1. Apparatus for use in making articles from composite material, comprising means (16) for drawing fibre resin material in sheet form from a supply (10) thereof, means (18, 20) for severing successive lengths of said material, and means for transferring said lengths to a former (36) on which a said article can be assembled from said lengths of material, characterised by at least two transfer tables (21, 22), each able to be positioned to receive a severed length of said material, and having a perforated surface with which the material can be held in contact by partial exhaustion of the interior of the transfer table, means (23, 24, 25) for positioning a transfer table (21 or 22) with said length of material thereon in a desired relationship with said former (36) and for releasing said length to transfer it to said former, while the other of said transfer tables (22 or 21) is in a position to receive another length of said material for subsequent transfer to said former (26).

2. Apparatus according to Claim 1 further characterized in that said transfer tables (21, 22) form an assembly movable angularly between positions in which respective tables (21, 22) are able to receive and transfer said material.

**Patentansprüche**

1. Vorrichtung zur Herstellung von Gegenständen aus Verbundwerkstoffen bestehend aus Mitteln (16) zum Abziehen von Faser-Harz-Verbundwerkstaff in Bahnform von einer Zuführeinrichtung (10), aus Mitteln (18, 20) zum Abtrennen aufeinanderfolgender Bahnabschnitte des Werkstoffes, und aus Mitteln zum Überführen der Bahnabschnitte an eine Formeinrichtung (36), auf der der Gegenstand aus den Bahnabschnitten des Werkstoffes aufbaubar ist, gekennzeichnet, durch mindestens zwei Überführungstische (21, 22) die beide jeweils in einer Position zur Aufnahme eines abgetrennten Bahnabschnittes des Werkstoffes bringbar sind und eine perforierte Oberfläche aufweisen mit der der Werkstoff durch Teilevakuierung des Innenraumes des Überführungstisches in Anlage haltbar ist, durch Mittel (23, 24, 25) zur Positionierung eines Überführungstisches (21 oder 22) mit dem darauf befindlichen Bahnabschnitt des Werkstoffes in einer gewünschten Relativlage zur Formeinrichtung (36) und zur Freigabe des besagten Bahnabschnittes zur Überführung an die Formeinrichtung, während der andere der besagten Überführungstische (22 oder 21) sich in einer Stellung befindet, in der ein weiterer Bahnabschnitt des Werkstoffes zur anschliessenden Überführung an die Formeinrichtung (26) aufnehmbar ist.

2. Vorrichtung nach Anspruch 1, dadurch gekennzeichnet, dass die Überführungstische (21, 22) eine zwischen Positionen, in der die Überführungstische zur Aufnahme und zur Übergabe des Werkstoffes gedacht sind, winkelbewegliche Baueinheit bilden.

**Revendications**

1. Appareil destiné à être utilisé dans la fabrication d'articles en matériau composite, comprenant un dispositif (16) pour tirer du matériau en feuille formé de résine armée de fibres d'une alimentation (10) de ce matériau, un dispositif (18, 20) pour détacher des longueurs successives de ce matériau et un dispositif pour transférer ces longueurs à un gabarit de formage (36) sur lequel un article peut être produit par assemblage de longueurs de matériau, caractérisé par au moins deux tables de transfert (21, 22) pouvant chacune être positionnée pour recevoir une longueur détachée dudit matériau et possédant un dessus perforé avec lequel le matériau peut être maintenu en contact par l'évacuation partielle de l'intérieur de la table de transfert, un dispositif (23, 24, 25) pour positionner une table de transfert (21 ou 22) avec la longueur de matériau sur elle de manière désirée par rapport au gabarit de formage (36) et pour libérer cette longueur en vue de son transfert au gabarit de formage, tandis que l'autre table de transfert (22 ou 21) occupe une position où elle peut recevoir une autre longueur de matériau destinée à être transférée ensuite au gabarit de formage (36).

2. Appareil selon la revendication 1, caractérisé en ce que les tables de transfert (21, 22) forment un ensemble déplaçable angulairement entre des positions où l'une ou l'autre des tables (21, 22) peut recevoir respectivement transférer la matériau.

FIG.1

FIG.2.

0 062 991